# EUROPEAN PATENT APPLICATION

(11) **EP 3 170 706 A1**
(43) Date of publication of application: **24.05.2017**
(21) Application number: 15821881.8
(22) Date of filing: 14.07.2015
(51) Int. Cl.: B60S 1/08, H02K 7/116

(54) **BRUSHLESS WIPER MOTOR**

(30) Priority: 15.07.2014 JP 2014145165
(71) Applicant: Mitsuba Corporation, Kiryu-shi, Gunma 376-8555 (JP)
(72) Inventor: AMANUMA, Junichi, Kiryu-shi Gunma 376-8555 (JP); SHODA, Hirokazu, Kiryu-shi Gunma 376-8555 (JP); ISO, Yukiyoshi, Kiryu-shi Gunma 376-8555 (JP)
(74) Representative: Vogel, Andreas
(86) International application number: PCT/JP2015/070112
(87) International publication number: WO 2016/010023

(57) **Abstract**

A motor case part (30) having a stator (36) and a gear case part (50) having a reduction mechanism (SD) are integrally formed of the same material. In this manner, heat is directly dissipated from the motor case part (30) to the outside without the gear case part (30). Therefore, a brushless wiper motor (20) can be improved in heat radiation performance so as to enhance strength in high temperature can be realized. By manufacturing the motor case part (30) and the gear case part (50) from aluminum, while sufficient radiation performance is secured, a thickness thereof is made thin and lack in rigidity can be overcome. Furthermore, It is unnecessary to manufacture the motor case part (30) and the gear case part (50) individually and it is also unnecessary to perform pressing to a steel plate like the conventional art. Therefore, workability of the motor case part (30) and the gear case part (50) can be improved.

## Description

### TECHNICAL FIELD

The present invention relates to a brushless wiper motor which swings a wiper member provided on a windshield.

### BACKGROUND ATR

Conventionally, a wiper apparatus for wiping rain water, dust and the like on a windshield is mounted on a vehicle such as automotive vehicle. The wiper apparatus is provided with: a wiper member provided on a windshield; and a wiper motor for swinging the wiper member. By ON-operation of a wiper switch provided within a vehicle compartment, the wiper motor is rotated so that the wiper member is swung on the windshield so as to wipe rain water or dust on the front windshield.

Such a wiper motor is described in for example Patent Document 1. The wiper motor (motor with reduction mechanism) described in Patent Document 1 is provided with: a motor part and a reduction mechanism. The motor part is provided with a yoke housing made of metal, and a stator having windings is fixed in the yoke housing. Furthermore, a rotor is rotatably provided inside the stator. In this manner, the wiper motor described in the above Patent Document 1 is constituted as a brushless motor.

On the other hand, the reduction mechanism is provided with: a gear housing made of aluminum; and a worm portion provided on a rotation shaft of the rotor, and a worm wheel meshed with the worm portion are housed in the gear housing. In this manner, the worm portion and the worm wheel collectively form the reduction mechanism, and the reduction mechanism enhances a torque by reducing rotation of the rotation shaft to output the rotation with the enhanced torque from an output shaft fixed to the worm wheel to the outside.

### RELATED ART DOCUMENTS

### PATENT DOCUMENTS

Patent Document 1: Japanese Patent application Laid-Open Publication No.: 2010-093977 (FIG. 3)

### SUMMARY OF THE INVENTION

### PROBLEMS TO BE SOLVED BY THE INVENTION

In addition, since the wiper motors are mounted on a wide variety of vehicles including a kei car (small-sized vehicle) and a large-sized vehicle, the wiper motors are desired to be reduced in size and weight for improvement of versatility thereof. Furthermore, since various electronic devices are mounted on a vehicle or the like, it is desirable to suppress electric noises occurring during operation of the wiper motor to a maximum extent. Therefore, a brushless motor like the wiper motor described in the above Patent Document 1 is adopted in the motor part.

However, according to the wiper motor (brushless wiper motor) described in the above Patent Document 1, since the yoke housing made of metal and the gear housing made of aluminum are coupled to each other, heat transferred to the yoke housing is partially transferred to the gear housing, and then dissipated the outside through the gear housing. That is, in the brushless wiper motor described in the above Patent Document 1, there is still a lot of room for performing improvement such that heat transferred to the yoke housing can be more efficiently dissipated to the outside.

Here, it is conceivable that the yoke housing is made thin in order to improve heat radiation performance. In this case, however, there is a problem that it is hard to form the yoke housing by pressing (deep drawing) while enhancing the rigidity of the yoke housing.

An object of the present invention is to provide a brushless wiper motor which can be improved in heat radiation performance while enhancing strength in high temperature, and improved in workability while solving lack in rigidity.

### MEANS FOR SOLVING THE PROBLEMS

In an aspect of the present invention, a brushless wiper motor for driving a wiper member in a swinging manner, comprising: a first case part in which a stator is fixed; a rotor rotatably provided inside the stator; a gear mechanism for transmitting rotation of the rotor to the wiper member; and a second case part formed of the same material as that of the first case part and integrally with the first case part, the gear mechanism being received in the second case part.

In another aspect of the present invention, a concavo-convex portion increased in surface area is formed outside at least one of the first case part and the second case part.

In another aspect of the present invention, the first case part and the second case part are made of aluminum.

In another aspect of the present invention, a retaining structure for retaining a bearing for rotatably supporting the rotor is provided in the first case part.

In another aspect of the present invention, the first case part is provided with an opening portion opened in an axial direction of the rotor, and the opening portion is closed by a cover member which does not contact with the rotor.

In another aspect of the present invention, an end portion of the stator in an axial direction thereof is provided so as to project from the opening portion, and the end portion of the stator in the axial direction is covered with the cover member.

### EFFECTS OF THE INVENTION

According to the present invention, since the first case part in which the stator is fixed and the second case part in which the gear mechanism is housed are integrally formed of the same material, heat transferred to the first case part can be directly dissipated from the first case part to the outside without intervention of the second case part. Therefore, a brushless wiper motor which has been improved in heat radiation performance while enhancing strength in high temperature can be realized.

Furthermore, by adopting material having a high thermal conductivity as the material of the first and second case parts, lack in rigidity of the first and second case parts can be overcome while sufficient heat radiation performance is maintained.

Furthermore, since the first and second case parts can be integrally formed by casting or the like, workability of the first and second case parts can be improved.

### BRIEF DESCRIPTION OF THE DRAWINGS

FIG. 1 is a view showing a wiper apparatus provided with a brushless wiper motor according to the present invention, and mounted on a vehicle;
FIG. 2 is a perspective view of the brushless wiper motor of FIG. 1, viewed from an output shaft side;
FIG. 3 is a perspective view of the brushless wiper motor of FIG. 1, viewed from a gear cover side;
FIG. 4 is a sectional view of the brushless wiper motor taken along a line A-A in FIG. 3;
FIG. 5 is an enlarged sectional view showing a modified example of a portion "B" circled by a broken line in FIG. 4;
FIG. 6 is a perspective view showing an application example to a modular type wiper apparatus of the brushless wiper motor of FIG. 1;
FIG. 7 is a perspective view explaining an assembling procedure of a brushless wiper motor of a second embodiment; and
FIG. 8 is a partially sectional view of the brushless wiper motor of FIG. 7 taken along an axial direction of a rotation shaft.

### DESCRIPTION OF THE PREFERRED EMBODIMENTS

Hereinafter, embodiments of the present invention will be described in detail with reference to the drawings.

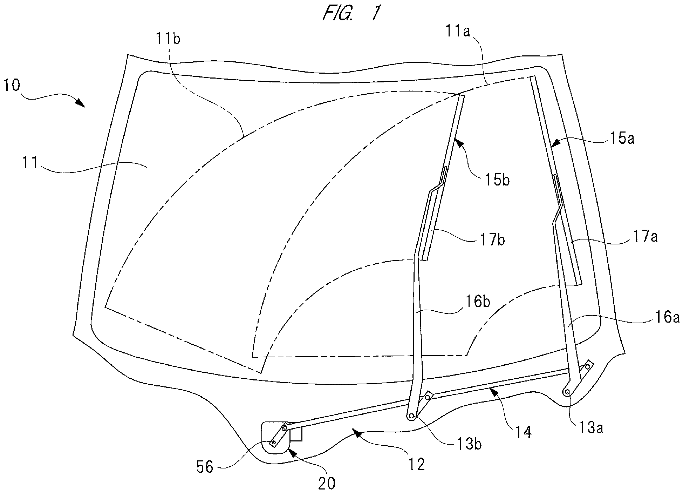

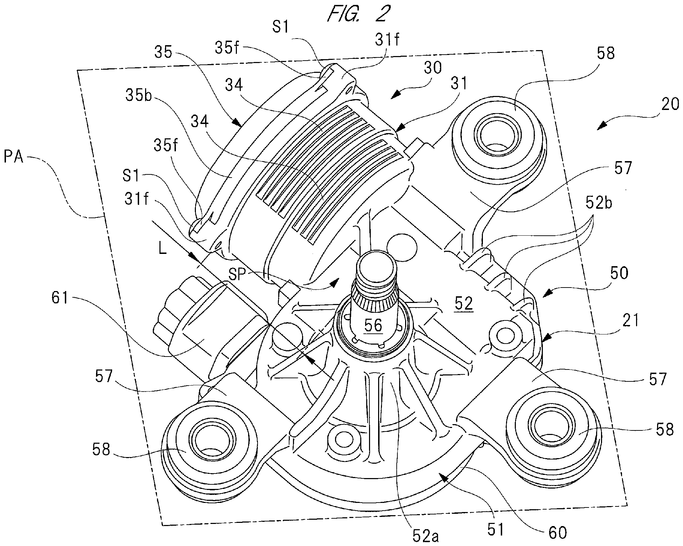

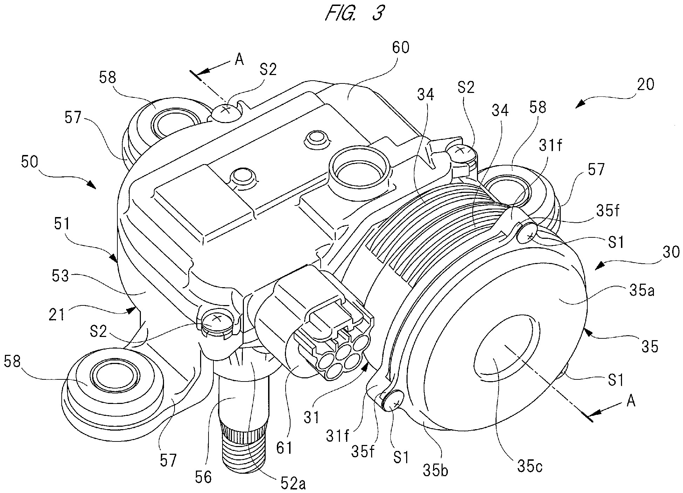

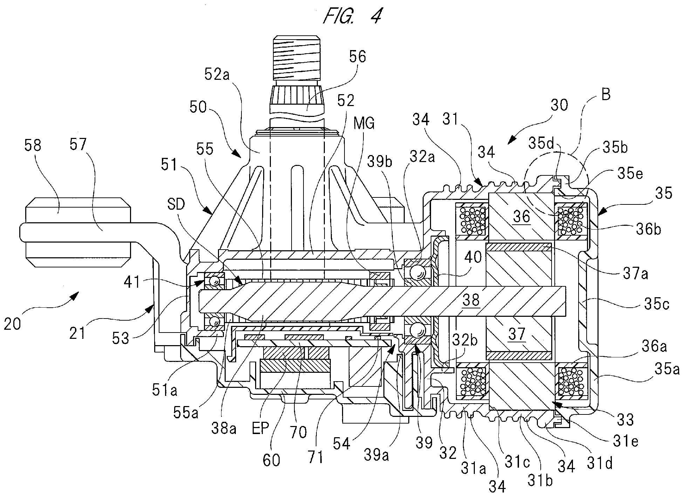

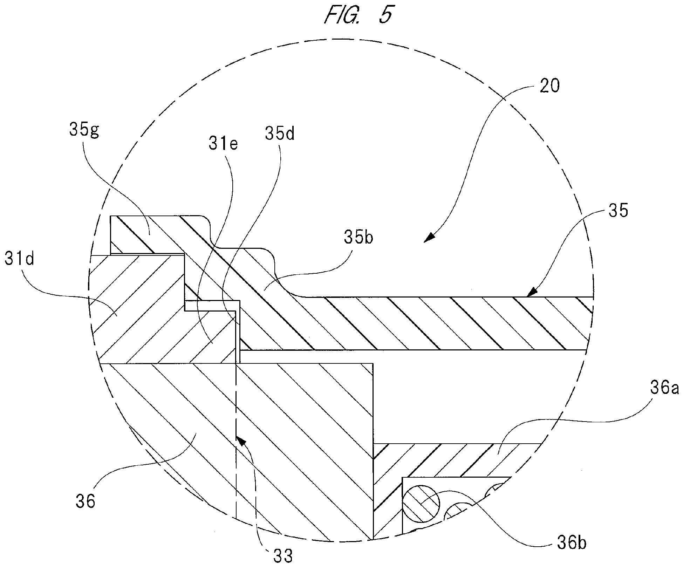

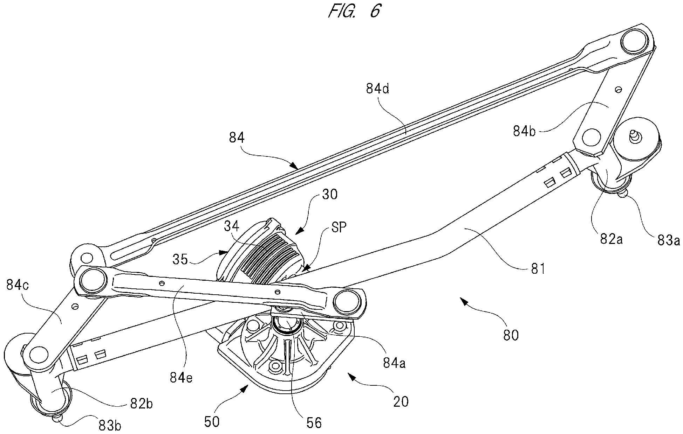

FIG. 1 is a view showing a wiper apparatus provided with a brushless wiper motor according to the present invention, and mounted on a vehicle; FIG. 2 is a perspective view of the brushless wiper motor of FIG. 1, viewed from an output shaft side; FIG. 3 is a perspective view of the brushless wiper motor of FIG. 1, viewed from a gear cover side; FIG. 4 is a sectional view of the brushless wiper motor taken along a line A-A in FIG. 3; FIG. 5 is an enlarged sectional view showing a modified example of a portion "B" circled by a broken line in FIG. 4; and FIG. 6 is a perspective view showing an application example to a modular type wiper apparatus of the brushless wiper motor of FIG. 1.

As shown in FIG. 1, a front windshield 11 is provided on a vehicle 10 such as automotive vehicle. A wiper apparatus 12 is mounted on a front end portion of the front windshield 11 in the vehicle 10. The wiper apparatus 12 is driven by ON-operation of a wiper switch (not shown) provided within a vehicle compartment, so that extraneous matter (not shown) such as rain water or dust on the front windshield 11 can be wiped.

The wiper apparatus 12 is provided with: a brushless wiper motor 20; a power transmission mechanism 14 for transmitting a swinging motion of the brushless wiper motor 20 to respective pivot shafts 13a and 13b; and a pair of wiper members 15a and 15b in which proximal sides thereof are respectively fixed to the pivot shafts 13a and 13b, and distal end sides thereof perform reciprocal wiping actions on the front windshield 11 according to swinging motions of the respective pivot shafts 13a and 13b.

The wiper members 15a and 15b are respectively provided so as to correspond to a driver's seat side and a passenger's seat side. The wiper members 15a and 15b are respectively composed of wiper arms 16a and 16b, and wiper blades 17a and 17b attached to the wiper arms 16a and 16b.

By rotationally driving the brushless wiper motor 20, a swinging motion of the brushless wiper motor 20 is transmitted to the respective pivot shafts 13a and 13b via the power transmission mechanism 14. Therefore, the pivot shafts 13a and 13b are respectively driven in a swinging manner. Thus, a driving force of the brushless wiper motor 20 is transmitted to the respective wiper members 15a and 15b, so that extraneous matters attached within respective wiping ranges 11a and lib of the front windshield 11 are wiped by the respective wiper blades 17a and 17b.

As shown in FIGS. 2 to 4, the brushless wiper motor 20 is provided with a housing 21 formed into a predetermined shape by casting molten aluminum material or on the basis of other processing. The housing 21 is provided with a motor case part 30 as a first case part and a gear case part 50 as a second case part. That is, the gear case part 50 is formed of the same material (aluminum material) as that of the motor case part 30, and integral with the motor case part 30.

The motor case part 30 is provided with a cylindrical main body 31 formed into an approximately cylindrical shape. An annular bottom portion 32 provided with a bearing attaching hole 32a at a central portion thereof is integrally provided to the cylindrical main body 31 on the same side as the gear case part 50 along an axial direction of the cylindrical main body 31. On the other hand, an opening portion 33 opened in an axial direction of a rotor 37 is formed on the opposite side to the gear case part 50 along the axial direction of the cylindrical main body 31. The opening portion 33 is closed by a cover member 35.

The cylindrical main body 31 is provided with: a small diameter portion 31a; and a large diameter portion 31b. The small diameter portion 31a is arranged on the cylindrical main body 31 on the same side as the annular bottom portion 32 along an axial direction of the cylindrical main body 31, while the large diameter portion 31b is arranged on the cylindrical main body 31 on the same side as the opening portion 33 along the axial direction of the cylindrical portion 31. In addition, a step portion 31c is provided inside the cylindrical main body 31 in a radial direction of the cylindrical main body 31, and between the small diameter portion 31a and the large diameter portion 31b. Furthermore, a cover-attaching flange portion 31d bulged in the radial direction of the cylindrical main body 31 and attached with the cover member 35 is provided on the large diameter portion 31b on the same side as the opening portion 33.

One end side (left side in FIG. 4) of the stator 36 in the axial direction thereof is caused to abut on the step portion 31c. That is, the step portion 31c performs positioning of the stator 36 to the axial direction of the cylindrical main body 31. Furthermore, an annular projecting portion 31e is formed on the cover-attaching flange portion 31d so as to project toward the other side (right side in FIG. 4) of the cylindrical main body 31 in the axial direction. The annular projecting portion 31e enters an annular recessed portion 35d provided to an annular attaching portion 35b of the cover member 35.

In addition, three female screw portions 31f are formed around the cover-attaching flange portion 31d so as to project in a radially outward direction of the cover-attaching flange portion 31d. These female screw portions 31f are respectively arranged at equal intervals (at intervals of 120°) along the circumferential direction of the cover-attaching flange portion 31d, and fixing screws S1 are coupled to the female screw portions 31f in a screwing fashion.

A plurality of cooling fins 34 as a concavo-convex portion is integrally provided on a radially outside part to the cylindrical main body 31. The cooling fins 34 are used for increasing an outside surface area of the cylindrical main body 31 to cause many outside regions of the cylindrical main body 31 to contact with external air, thereby improving heat radiation performance of the cylindrical main body 31. As shown in FIGS. 2 and 3, the cooling fins 34 are arranged in spaced side-by-side relation to each other in the axial direction of the cylindrical main body 31, and provided so as to extend in a circumferential direction of the cylindrical main body 31.

Here, the cooling fins 34 are arranged at two portions of the cylindrical main body 31 on the same side as the output shaft 56 and the gear cover 60 along the circumferential direction of the cylindrical main body 31, without being provided over the whole circumference of the cylindrical main body 31. In this manner, sufficient heat radiation performance and sufficient strength of the motor case part 30 are secured. However, according to the specification (rated power and the like) of the brushless wiper motor, cooling fins may be provided over the whole circumference of the cylindrical main body 31. By providing the cooling fins over the whole circumference of the cylindrical main body 31, fluidity of melted aluminum material at a casting time can be improved, thereby resulting in improvement in cooling performance. Furthermore, as compared with one example in which the cooling fins are provided partially, cooling performance of the motor case part 30 can be further improved, and flowing of rain water can be made easy when the rain water is attached to the cylindrical main body 31.

The cover member 35 is attached to the opening portion 33 of the cylindrical main body 31. The cover member 35 is formed of synthetic resin such as plastic or the like into an approximately circular plate-like shape, and provided with: a bottom wall portion 35a; and the annular attaching portion 35b. A recessed portion 35c recessed toward (left side in FIG. 4) of the cylindrical attaching portion 31 is provided at a central portion of the bottom wall portion 35a. The recessed portion 35c has a function of enhancing rigidity of the cover member 35 and a function of suppressing resonance of the bottom wall portion 35a during operation of the brushless wiper motor 20 to prevent strange noise from being generated. The rotor 37 including the rotation shaft 38 does not contact with the recessed portion 35c provided in this cover member 35.

An annular recessed portion 35d is formed on the annular attaching portion 35b and recessed toward the other side (right side in FIG. 4) of the cylindrical main body 31 in the axial direction. The annular projecting portion 31e provided on the cover-attaching flange portion 31d enters the annular recessed portion 35d. In this manner, by causing the annular projecting portion 31e of the cylindrical main body 31 and the annular recessed portion 35d of the cover member 35 to be engaged with each other in a concavo-convex manner, a labyrinth effect is generated between the both. That is, sealing performance between the cylindrical main body 31 and the cover member 35 is secured. However, when it is required to further improve the sealing performance, seal agent may be interposed between the annular projecting portion 31e and the annular recessed portion 35d when assembling the cover member 35 to the cylindrical main body 31.

An annular stator abutting portion 35e is provided on the inside of the annular attaching portion 35b in a radial direction thereof. The annular stator abutting portion 35e abuts on the other end side of the stator 35 in the axial direction. The annular stator abutting portion 35e performs positioning of the stator 36 to the axial direction of the cylindrical main body 31 in cooperation with the step portion 31c. Incidentally, during operation of the brushless wiper motor 20, since such a large load as to move the stator 36 in the axial direction is not applied to the stator 36, the cover member 35 is not detached from the cylindrical main body 31.

Three screw fixing portions 35f are formed on the outside of the annular attaching portion 35b in the radial direction so as to project outside the annular attaching portion 35b in the radial direction of the annular attaching portion 35b. These screw fixing portions 35f are respectively arranged at equal intervals (at intervals of 120°) along the circumferential direction of the annular attaching portion 35b, and screws S1 are inserted into the respective screw fixing portions 35f. The fixing screws S1 are used for fixing the cover member 35 to the cylindrical main body 31, and they are coupled to the respective female screw portions 31f in a screwing manner.

Incidentally, an attaching relationship between the opening portion 33 of the cylindrical main body 31 and the cover member 35 may be set as shown in FIG. 5. Specifically, the length of the cylindrical main body 31 in the axial direction is made short, so that the end portion of the stator 36 in the axial direction is caused to project from the opening portion 33. The end portion of the stator 36 in the axial direction caused to project from the opening portion 33 is covered with the cover member 35. In the cover member 35 shown as a modified example in FIG. 5, the cover member 35 is not provided with the stator abutting portion 35e shown in FIG. 4, and an outer fitting portion 35g is provided on the outside of the annular attaching portion 35b in the radial direction instead of the stator abutting portion 35e. The cover member 35 is attached to the cylindrical main body 31 by fitting (outer-fitting) of the outer fitting portion 35g to the cover-attaching flange portion 31d without abutting on the stator 36. By setting the attaching relationship between the opening portion 33 and the cover member 35 such as shown in FIG. 5, positioning (insertion amount) of the stator 36 to the cylindrical main body 31 can be performed for each product without errors. Furthermore, since the length of the cylindrical main body 31 in the axial direction is made short, it becomes possible to achieve further weight reduction. In addition, since the cover member 35 does not abut on the stator 36, deformation of the cover member 35 due to heat can be prevented in advance.

The stator 36 is fixed inside the cylindrical main body 31 forming part of the motor case part 30. The stator 36 is formed into an approximately cylindrical shape by stacking a plurality of steel plates (not shown) which are magnetic bodies, and an outer peripheral portion of the stator 36 is caused to contact with the cylindrical main body 31 without any clearance. Therefore, heat accumulated in the stator 36 is efficiently transferred to the cylindrical main body 31.

Coil bobbins 36a made of resin is insulator, and respectively provided on both sides of the stator 36 in the axial direction. The coil bobbin 36a has U-phase, V-phase and W-phase coils 36b (three-phase) wounded thereon. End portions (not shown) of these coils 36b are electrically connected to each other so as to constitute a star connection ("Y"-connection). However, a connecting method of each coil 36b is not limited to the star connection, but another connecting method such as delta connection (triangular connection) can be adopted.

Driving currents are respectively supplied to the coils 36b from an electronic part EP composed of switching elements of a control board 70 attached inside the gear cover 60 at a predetermined timing. In this manner, an electromagnetic force is generated in the stator 36, so that the rotor 37 positioned inside the stator 36 is rotationally driven in a predetermined direction with a predetermined driving torque.

The rotor 37 is rotatably provided inside the stator 36 via a predetermined clearance (air gap). The rotor 37 is formed into an approximately columnar shape by stacking steel plates (not shown) which are magnetic material. A plurality of permanent magnets 37a formed into an approximately arc shape in cross section are attached on the rotor 37.

The permanent magnets 37a are arranged at equal intervals (at intervals of 90°) such that polarities are alternated along a circumferential direction of the rotor 37. Thus, the brushless wiper motor 20 constitutes a brushless motor having an SPM (surface permanent magnet) structure in which the permanent magnets 37a are attached to the rotor 37. However, the present invention is not limited to the brushless motor having an SPM structure but a brushless motor having an IPM (interior permanent magnet) structure in which permanent magnets are embedded in the rotor 37 may be adopted.

The rotation shaft 38 is fixed at the axial center of the rotor 37 so as to extend through the axial center. An approximately central portion of the rotation shaft 38 along an axial direction thereof is rotatably supported by a first ball bearing (bearing) 39 attached to the bearing attaching hole 32a of the cylindrical main body 31. That is, the rotor 37 is rotatably supported by the first ball bearing 39. An outer wheel 39a of the first ball bearing 39 is pressed by an annular stopper spring 40, and fixed to the bearing attaching hole 32a. The stopper spring 40 is fixed to a stopper fixing portion 32b formed in the annular bottom portion 32 by press-fitting. Here, the bearing attaching hole 32a and the stopper fixing portion 32b of the motor case part 30, and the stopper spring 40 collectively constitute the retaining structure of the present invention.

On the other hand, an inner wheel 39b of the first ball bearing 39 is fixed at an approximately central portion of the rotation shaft 38 in the axial direction by a retaining ring, a caulking or the like (not shown). That is, by fixing the first ball bearing 39 to the bearing attaching hole 32a, the rotation shaft 38 is made immovable in the axial direction. In this manner, the rotation shaft 38 is prevented from wobbling in the axial direction inside the housing 21, thereby resulting in smooth rotation of the rotation shaft 38. Therefore, an excessive load to move the stator 36 in the axial direction is not applied to the stator 36.

The opposite side of the rotation shaft 38 to the rotor 37 in the axial direction is caused to extend up to the inside of the gear case main body 51 forming part of the gear case part 50. One end side (left side in FIG. 4) of the rotation shaft 38 in the axial direction is rotatably supported by a second ball bearing 41 attached to a bearing attaching portion 51a of the gear case main body 51. Here, since the second ball bearing 41 supports the rotation shaft 38 from only a radial direction of the rotation shaft 38, it is made smaller in size than that of the first ball bearing 39.

A worm 38a forming part of the reduction mechanism (gear mechanism) SD is provided between the first ball bearing 39 and the second ball bearing 41 along the axial direction of the rotation shaft 38. Incidentally, spiral worm teeth (not shown) meshed with gear teeth 55a of a worm wheel 55 are formed on an outer peripheral portion of the worm 38a.

The gear case main body 51 is formed into an approximately bathtub shape with a bottom, and provided with: a bottom portion 52; a side wall portion 53; and an opening portion 54. The bottom portion 52 is integrally formed with the annular bottom portion 32 of the cylindrical main body 31 at one side (upper side in FIG. 4) thereof through the rotation shaft 38. Furthermore, the other side (lower side in FIG. 4) of the annular bottom portion 32 of the cylindrical main body 31 through the rotation shaft 38 partially forms the opening portion 54.

The worm wheel 55 is rotatably received inside the gear case main body 51. The worm wheel 55 is formed of synthetic resin such as POM (polyacetal) plastic or the like in an approximately circular plate shape, and the worm wheel 55 has an outer peripheral portion formed with gear teeth 55a. Worm teeth of the worm 38a are meshed with the gear teeth 55a of the worm wheel 55. The worm wheel 55 and the worm 38a collectively constitute the gear mechanism SD housed in the gear case main body 51, and form the reduction mechanism SD for reducing a rotation speed of the rotation shaft 37 (see FIG. 4).

A proximal end side of an output shaft 56 is fixed to an axial center of the worm wheel 55, and the output shaft 56 is rotatably supported by a boss portion 52a integrally provided on the bottom portion 52 of the gear case main body 51. A distal end side of the output shaft 56 extends outside the gear case main body 51, and the power transmission mechanism 14 (see FIG. 1) is fixed to a distal end portion of the output shaft 56. In this manner, the rotation speed of the rotation shaft 38 is reduced by the reduction mechanism SD, so that an output subjected to a high torque by reduction in speed is transmitted from the output shaft 56 to the power transmission mechanism 14. Therefore, the wiper members 15a and 15b (see FIG. 1) are driven in a swinging manner. Thus, the reduction mechanism SD transmits rotation of the rotor 37 to the wiper members 15a and 15b via the power transmission mechanism 14.

As shown in FIGS. 2 and 3, three attaching legs 57 are provided integrally around the gear case main body 51. Rubber bushes 58 are respectively attached to these attaching legs 57. In this manner, with the brushless wiper motor 20 mounted on the vehicle 10 (see FIG. 1), vibrations of the brushless wiper motor 20 are hard to be transmitted to the vehicle 10. Furthermore, on the contrary, vibrations of the vehicle 10 are hard to be transmitted to the brushless wiper motor 20.

As shown in FIG. 2, three cooling fins 52b as a concavo-convex portion are integrally provided on the outside of the bottom portion 52 forming part of the gear case part 51. These cooling fins 52b are arranged in the vicinity of a switching element (not shown) particularly easy to generate heat and mounted on a control board 70 (see FIG. 4). Therefore, heat accumulated in the switching element can be rapidly dissipated outside the gear case main body 51, which results in improvement of the heat radiation performance of the whole control board 70.

The opening portion 54 of the gear case main body 51 is sealed by the gear cover 60 made of plastic or the like. The gear cover 60 is fixed to the gear case main body 51 by three fixing screws S2 as shown in FIG. 3. A control board 70 for controlling rotation of the rotor 37 (the rotation shaft 34) is fixed inside the gear cover 60. The control board 70 is electrically connected to a vehicle-mounted battery (not shown) and a wiper switch via an external connector (not shown) of the vehicle 10 which is connected to a connector connection portion 62 provided to the gear cover 60.

A rotation detecting sensor 71 for detecting rotation states (rotation direction, the number of revolutions or the like) of the rotation shaft 38 is mounted on the control board 70. Here, as the rotation detecting sensor 71, a Hall sensor (Hall IC) for detecting magnetic field is used. The rotation detecting sensor 71 is opposed to a sensor magnet MG fixed to the rotation shaft 38 to be rotated together with the rotation shaft 38. Here, the sensor magnet MG is constituted so that polarities thereof alternately appear in a circumferential direction of the sensor magnet MG. Therefore, a pulse signal is outputted from the rotation detecting sensor 71 according to rotation of the sensor magnet MG.

The CPU (not shown) mounted on the control board 70 monitors a pulse signal from the rotation detecting sensor 71. Therefore, the CPU grasps operation states (position, speed or the like) of the wiper blades 17a and 17b (see FIG. 1) to rotationally drive the brushless wiper motor 20.

Next, the operation of the brushless wiper motor 20 formed in the above manner will be described in detail with reference to the drawings.

When a wiper switch is ON-operated, the brushless wiper motor 20 is rotationally driven. At this time, the CPU mounted on the control board 70 sequentially ON/OFF-controls switching elements corresponding to the U-phase, V-phase and W-phase coils 36b mounted on the control board 70. In this manner, electromagnetic forces are sequentially generated in the U-phase, V-phase and W-phase coils 36b toward the circumferential direction of the stator 36. Therefore, the rotor 37 attached with the permanent magnets 37a is rotated at a predetermined rotation speed in a predetermined rotation direction.

For example, during heavy rain, the wiper switch is switched to "Hi (high speed)", the brushless wiper motor 20 is driven at a high speed while enhancing an output of the motor, and such a state is continued for about 2 hours (long time). This operation situation correspond to a state that the wiper apparatus 12 (see FIG. 1) is continuously operated at a relatively high load.

In this operation situation, the coils 36b rapidly reach high temperature, and heats accumulated in the coils 36b are efficiently dissipated to the outside via the stator 36, the cylindrical main body 31, and the cooling fins 34. Furthermore, even in the switching elements mounted on the control board 70, they rapidly reach high temperature like the coils 36b, because they are ON/OFF-controlled at a high speed, heats accumulated at the switching elements are efficiently dissipated to the outside via the bottom portion 52 and the three cooling fins 52b.

Here, the temperature of coils in the structure of the present invention and that of the conventional structure under the same operation situation are compared with each other. As a result, in the structure of the present invention, heat radiation performance is largely improved since the motor case part 30 and the gear case part 50 are integrally formed of aluminum material, and the temperature of the coils 36b is "about 80º". On the other hand, in the conventional structure, since the motor case is made of iron, heat radiation performance is poor as compared with the structure of the present invention, and the temperature of the coils is "about 140º". Furthermore, the temperature of the motor case part 30 in the structure of the present invention is "about 60º", while the temperature of the motor case made of iron in the conventional structure is "about 100º".

As described above in detail, in the brushless wiper motor 20 according to this embodiment, since the motor case part 30 in which the stator 36 is fixed and the gear case part 50 in which the reduction mechanism SD is housed are integrally formed of the same material, heat transferred to the motor case part 30 can be directly dissipated from the motor case part 30 to the outside without intervention of the gear case part 50. Therefore, the brushless wiper motor 20 can be improved in heat radiation performance while enhancing strength in high temperature can be realized.

Furthermore, since the material of the motor case part 30 and the gear case part 50 is aluminum having a high thermal conductivity, sufficient heat radiation performance can be secured. Since the sufficient heat radiation performance can be secured, lack in rigidity can be overcome by making thickness of the motor case part 30 and the gear case part 50 thick.

In addition, since the motor case part 30 and the gear case part 50 can be integrally formed by casting or the like, it becomes unnecessary to manufacture the motor case part 30 and the gear case part 50 individually. Furthermore, since it becomes unnecessary to perform pressing or the like to a steel plate like the conventional art, workability of the motor case part 30 and the gear case part 50 can be improved.

Here, the brushless wiper motor 20 is suitably applicable to a modular type wiper apparatus. An application example (modified example) of the brushless wiper motor 20 to the modular type wiper apparatus will be explained with reference to FIG. 6.

In the brushless wiper motor 20, as shown in FIG. 2, the female screw portions 31f and the screw fixing portions 35f, that is, portions of the cylindrical main body 31 and the cover member 35 bulging outside in the radial direction can be disposed so as to be spaced from a boss portion 52a of the gear case part 50 by a distance "L" . Furthermore, the size of the cylindrical main body 31 in the axial direction can be shortened corresponding to unnecessity of provision of a brush holder or the like. Therefore, a projection area range PA of the brushless wiper motor 20 can be made approximately square and a space SP crossing an approximately central portion inside the projection area range PA can be secured at the approximately central portion inside the projection area range PA.

Therefore, as shown in FIG. 6, a pipe frame 81 of a modular type wiper apparatus 80 can be disposed so as to cross the space SP. That is, the brushless wiper motor 20 can be fixed to the pipe frame 81 at a position of the brushless wiper motor 20 approximately corresponding to the gravity center of the brushless wiper motor 20. In this manner, the modular type wiper apparatus 80 can be enhanced in weight balance. In addition, the brushless wiper motor 20 is applied to the modular type wiper apparatus 80 without being provided with the attaching leg portions 57 (see FIG.2), and fixed to the pipe frame 81 by an attaching bracket (not shown).

First and second pivots 82a and 82b are fixed to respective ends of the pipe frame 81 in a longitudinal direction thereof, and the first and second pivots 82a and 82b rotatably support first and second pivot shafts 83a and 83b. A power transmission mechanism 84 for transmitting a swinging motion of the output shaft 56 to the first and second pivot shafts 83a and 83b is provided at proximal end portions of the first and second pivot shafts 83a and 83b. The proximal end portions of the respective wiper arms 16a and 16b (see FIG. 1) are fixed at distal end portions of the first and second pivot shafts 83a and 83b.

The power transmission mechanism 84 is composed of: a crank arm 84a fixed to the output shaft 56; a pair of driving levers 84b and 84c fixed to the proximal end portions of the first and second pivot shafts 83a and 83b; a connection rod 84d provided between the respective driving levers 84b and 84c; and a driving rod 84e provided between one driving lever 84c and the crank arm 84a.

Next, the second embodiment of the present invention will be described in detail with reference to the drawings, and detail description about portions the same in function as those of the first embodiment is omitted, and those are denoted by the same reference characters as those of the first embodiment.

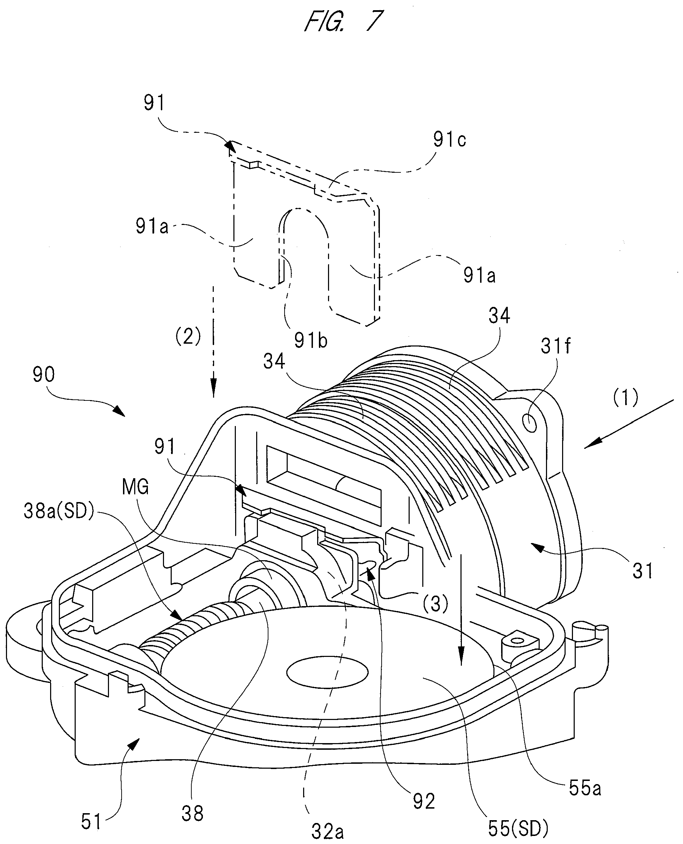

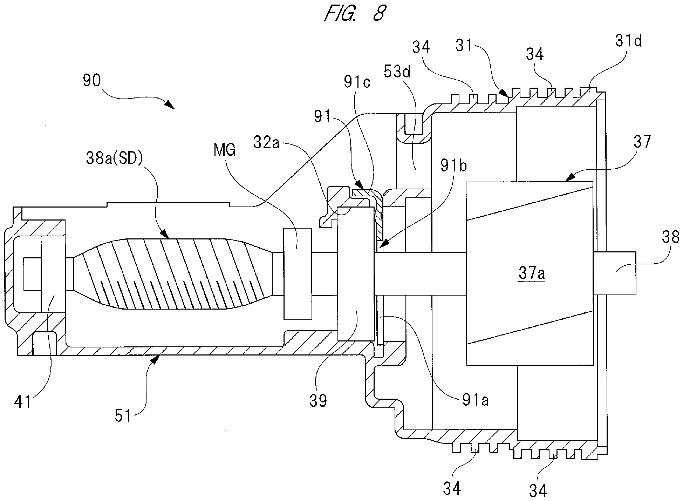

FIG. 7 is a perspective view explaining an assembling procedure of a brushless wiper motor of a second embodiment; and FIG. 8 is a partially sectional view of the brushless wiper motor of FIG. 7 taken along an axial direction of a rotation shaft.

As shown in FIGS. 7 and 8, a brushless wiper motor 90 according to the second embodiment is different only in a fixing structure of the first ball bearing 39 (see FIG. 4) to the bearing attaching hole 32a from the first embodiment. Specifically, in the first embodiment, as shown in FIG. 4, the annular stopper ring 40 is assembled to the rotation shaft 38 in advance, and it is press-fitted to the stopper fixing portion 32b from the same direction as the attaching direction (axial direction of the rotation shaft 38) of the first ball bearing 39 to the bearing attaching hole 32a, thereby fixing the first ball bearing 39 to the bearing attaching hole 32a.

On the other hand, in the second embodiment, as shown in FIGS. 7 and 8, by using a stopper member 93 separated from the rotor unit 91, the first ball bearing 39 is fixed to the bearing attaching hole 32a. Here, the stopper member 91 is fixed to a stopper member attaching portion 92 provided in the vicinity of the bearing attaching hole 32a by press-fitting. In addition, the bearing attaching hole 32a and the stopper member attaching portion 92, and the stopper member 91 press-fitted into the stopper member attaching portion 92 collectively constitute a retaining structure in the present invention.

The stopper member 91 is formed into an approximately U-shape by pressing a steel plate or the like. The stopper member 91 has a pair of bearing pushing portions 91a which is plugged into the stopper member attaching portion 92. A notched portion 91b for avoiding interference with the rotation shaft 38 is provided between the pair of bearing pushing portions 91a. Furthermore, the stopper member 91 is provided with a jig pad portion 91c pushed down by a pushing jig (not shown) when the bearing pushing portions 91a are respectively plugged into the stopper member attaching portion 92. An extending direction of the jig pad portion 91c is directed in a direction approximately perpendicular to an extending direction of the bearing pushing portions 91a.

For assembling the first ball bearing 39 to the bearing attaching hole 32a, first, as shown by arrow (1) in FIG. 7, a portion of the rotation shaft 38 on the worm 38a side is caused to face the bearing attaching hole 32a from the same side as the cylindrical main body 31. The worm 38a is caused to pass through the bearing attaching hole 32a so that the first ball bearing 39 is attached to the bearing attaching hole 32a. Next, as shown by a two-dot chain line arrow (2) in FIG. 7, the stopper member 91 is caused to face the stopper member attaching portion 92 from a direction crossing the axial direction of the rotation shaft 38. While a pressing jig is caused to abut on a jig abutting portion 91c, the stopper member 91 is pressed toward the stopper member attaching portion 92. Therefore, as shown in FIG. 8, the first ball bearing 39 is clamped between a portion formed with the bearing attaching hole 32a along the axial direction of the rotation shaft 38 and the stopper member 91, so that assembling of the worm 38a (rotation shaft 38) to the gear case main body 51 is completed.

Next, as shown by an arrow (3) in FIG. 7, the distal end side of the output shaft 56 (see FIG. 4) is plugged into the boss portion 52a (see FIG. 4) from the inside of the gear case main body 51. At this time, by swinging the worm wheel 55 in forward and reverse directions, the gear teeth 55a are caused to mesh with the teeth portion 38a. In this manner, the worm wheel 55 is housed in a normal position in the gear case main body 51, and the reduction mechanism SD composed of the worm 38a and the worm wheel 55 is housed in the gear case main body 51.

In the second embodiment formed in the above manner, operation and effects similar to those of the first embodiment can be achieved. In addition, in the second embodiment, since the stopper member 91 is attached to the stopper member attaching portion 92 in the direction crossing the axial direction of the rotation shaft 38, even if a large axial force is applied to the rotation shaft 38 during operation of the reduction mechanism SD, movement of the rotation shaft 38 in the axial direction thereof or wobbling thereof is securely prevented.

It goes without saying that the present invention is not limited to the above-described embodiments, and it can be variously modified without departing from the gist of the present invention. In the above embodiments, the motor case part 30 and the gear case part 50 are made of aluminum, which is the same in material as each other, and integrally formed by casting, but the present invention is not limited to this example, and the motor case part and the gear case part may be integrally formed by using metal material which is another material and utilizing another working method.

Furthermore, in the above embodiments, the cooling fins 34 and 52b as the concavo-convex portions are provided on both of the motor case part 30 and the gear case part 50, but the present invention is not limited to this example, and the cooling fins may be provided on either one of the motor case part 30 and the gear case part 50. In this case, for suppressing lowering of heat radiation performance of the whole brushless wiper motor, it is desirable to provide the cooling fines on one of the motor case part 30 and the gear case part 50 which reaches a higher temperature during operation of the brushless wiper motor.

In addition, in the above embodiments, the example where the cooling fins 34 as the concavo-convex portion are provided partially so as to extend in the circumferential direction of the cylindrical main body 31, but the present invention is not limited to this example, and the cooling fins may be provided so as to extend in the axial direction of the cylindrical main body 31. Furthermore, for example, countless fine recesses (dimples) as the concavo-convex portion may be formed on the outside of the cylindrical main body 31. In short, when the concavo-convex portion can increase the outside surface area of the cylindrical main body 31, any shape thereof or any number thereof can be adopted.

Furthermore, in the above embodiments, the cover member 35 for closing the opening portion 33 is formed of synthetic resin such as plastic or the like, but the present invention is not limited to this example, and the cover member may be formed of another material such as iron, aluminum or the like. In addition, in the above embodiments, the cover member 35 is fixed by three fixing screws S1, but a fixing strength of the cover member 35 to the cylindrical main body 31 is not required to be so high. Therefore, fixing may be performed by using two screws, fixing may be performed by engagement of an engaging pawl in one-touch manner, or furthermore, the cover member itself may be connected to the opening portion in a screwing manner. Furthermore, air tightness between the cover member 35 and the cylindrical main body 31 is only required to be maintained.

Furthermore, in the above embodiments, the wiper apparatuses 12 and 80 are respectively provided with the power transmission mechanisms 14 and 84, but the present invention is not limited to this, and it may be made unnecessary to have the power transmission mechanisms 14 and 84 in the course of transmission of the swinging motion of the brushless wiper motors 20 and 80 to the pivot shafts 13a and 13b, or 83a and 83b. In this case, brushless wiper motors corresponding to the respective pivot shafts 13a and 13b, or 83a and 83b are provided in order to transmit power to the respective pivot shafts 13a and 13b, or 83a and 83b.

Furthermore, in the above embodiments, the brushless wiper motors 20 and 90 are applied as a driving source of the wiper apparatus 12 wiping the front windshield 11 of the vehicle 10, but the present invention is not limited to this example, and it can also be applied to a driving source of a rear wiper apparatus of a vehicle, or a driving source of a wiper apparatus of a railway vehicle, a ship, a construction machine or the like.

### INDUSTRIAL APPLICABILITY

The brushless wiper motor is used as a driving source of a wiper apparatus mounted on a vehicle such as automotive vehicle, and it is used to drive a wiper arm in a swinging manner to wipe rain water or the like attached to a windshield.

## Claims

1. A brushless wiper motor for driving a wiper member in a swinging manner, comprising:
a first case part in which a stator is fixed;
a rotor rotatably provided inside the stator;
a gear mechanism for transmitting rotation of the rotor to the wiper member; and
a second case part formed of the same material as that of the first case part and integrally with the first case part, the gear mechanism being housed in the second case part.

2. The brushless wiper motor according to claim 1, wherein a concavo-convex portion increasing a surface area at least one of the first case part and the second case part is formed outside said at least one of the first case part and the second case part.

3. The brushless wiper motor according to claim 1, wherein the first case part and the second case part are made of aluminum.

4. The brushless wiper motor according to claim 1, wherein a retaining structure for retaining a bearing for rotatably supporting the rotor is provided inside the first case part.

5. The brushless wiper motor according to claim 1, wherein the first case part is provided with an opening portion opened in an axial direction of the rotor, and the opening portion is closed by a cover member which does not contact with the rotor.

6. The brushless wiper motor according to claim 5, wherein an end portion of the stator in an axial direction thereof is provided so as to project from the opening portion, and the end portion of the stator in the axial direction is covered with the cover member.
